Europäisches Patentamt

European Patent Office

Office européen des brevets

(11) Veröffentlichungsnummer: **0 503 575 A2**

## (12) EUROPÄISCHE PATENTANMELDUNG

(21) Anmeldenummer: **92104112.5**

(22) Anmeldetag: **10.03.92**

(51) Int. Cl.5: **F16M 13/00**

(30) Priorität: **13.03.91 DE 9103039 U**

(43) Veröffentlichungstag der Anmeldung:
**16.09.92 Patentblatt 92/38**

(84) Benannte Vertragsstaaten:
**AT BE CH DE ES FR GB IT LI NL SE**

(71) Anmelder: **Siemens Nixdorf
Informationssysteme Aktiengesellschaft
Fürstenallee 7
W-4790 Paderborn(DE)**

(72) Erfinder: **Stickel, Heinz, Dipl.-Ing. (FH)
Augsburgerstrasse 46
W-8038 Gröbenzell(DE)**
Erfinder: **Soos, Peter, Dipl.-Ing.
Händelstrasse 2
W-8905 Mering(DE)**

(74) Vertreter: **Fuchs, Franz-Josef, Dr.-Ing. et al
Postfach 22 13 17
W-8000 München 22(DE)**

(54) **Vorrichtung zur sicheren vertikalen Aufstellung eines Desktop-Personalcomputers (PC).**

(57) Die Aufstellvorrichtung besteht aus einer Rückwand (2), einer Bodenplatte (1), einem Luftfilter (4,5) und zwei Stegen (3). Die Stege (3) gewähren Kippsicherheit bei der Aufstellung. Der Desktop-PC wird nur mit der Rückwand (2) fest verbunden und kann ohne Entfernen der Aufstellvorrichtung gewartet werden.

FIG 1

EP 0 503 575 A2

Deskop-Personalcomputer werden üblicherweise horizontal, beispielsweise auf einem Tisch aufgestellt. An ihrer häufig unlakierten Unterseite befinden sich Gummifüße, die ein rutschfestes horizontales Aufstellen des Desktop-PC gewährleisten.

Aus Platz- oder sonstigen Gründen besteht häufig der Wunsch, den Desktop-PC in vertikaler Richtung aufzustellen. Ein solches Aufstellen ist aber aus Gründen der Kippsicherheit nicht ohne spezielle Hilfsmittel möglich.

Der in den Ansprüchen angegebenen Erfindung liegt das Problem zugrunde, ein kippsicheres Hilfsmittel zur vertikalen Aufstellung des Desktop-PC zu schaffen, das universell für das Aufstellen oder Aufhängen des Desktop-PC in vertikaler Richtung einsetzbar ist, ohne eine einfache Wartung des Desktop-PC zu behindern.

Dieses Problem wird durch die im Anspruch 1 angegebenen Merkmale gelöst.

Mit der Erfindung wird ein sicheres Aufstellen oder Aufhängen des Desktop-PC ermöglicht. Zum Aufhängen werden beispielsweise die Köpfe von in eine Wand gedrehten Schrauben so in Öffnungen der Rückwand gesteckt, daß sie einen Teil der Öffnungen formschlüssig umgreifen. Zum Aufstellen werden Mittel an der Bodenplatte angebracht, die die nach unten weisende Seitenwand des vertikal aufgestellten Desktop-PC so verbreitern, daß eine so hohe Kippsicherheit erreicht wird, die beispielsweise den vom VDE (Verein deutscher Elektrotechniker) festgelegten Vorgaben entspricht. Dies wird erreicht, ohne auf das Gehäuse des Desktop-PC in irgendeiner Weise manipulierend (Verformen, Bohrungen einbringen etc.) so einzuwirken, daß eine einfache Wartbarkeit beeinflußt würde. Besonders wichtig ist dabei die Idee, die Verbindung zwischen der Aufstellvorrichtung und dem Desktop-PC ausschließlich zwischen der Unterseite des Desktop-PC und der Rückwand der Aufstellvorrichtung zu realisieren. Die Unterseite des Desktop-PC ist Teil des Chassis des Desktop-PC. Beispielsweise kann eine über das Chassis geschobene oder gestülpte Haube vom Chassis genommen werden, ohne durch die Aufstellvorrichtung behindert zu werden. Ein Zugriff in den Desktop-PC ist also durch die gleichen Maßnahmen möglich, wie bei horizontaler Aufstellung ohne Aufstellvorrichtung. Eine schnelle und einfache Montage des Desktop-PC auf der Rückwand ist durch die Mittel zur Befestigung und/oder Zentrierung gegeben.

Vorteilhafte Weiterbildungen und Ausgestaltungen der Erfindung sind in den Ansprüchen 2 bis 13 angegeben.

Die Ausgestaltung nach Anspruch 2 gibt ein für verschiedene Einsatzmöglichkeiten geeignetes Mittel zum kippsicheren Aufstellen an. Durch die Wahl der äußeren Form der Stege kann besonders einfach auf die Bedingungen, die ein Aufstellungsort bietet, eingegangen werden. Beispielsweise können die Stege so gestaltet sein, daß ein seitliches Anstellen des vertikal aufgestellten Desktop-PC an eine Wand möglich ist.

Die Weiterbildungen gemäß den Ansprüchen 3 und 4 geben eine besonders vorteilhafte Ausgestaltung der Stege und deren Befestigung an der Bodenplatte an.

Die Weiterbildung gemäß Anspruch 5 stellt sicher, daß auch Eingriffe von der Seite her in den Desktop-PC bei montierter Aufstellvorrichtung möglich sind.

Die Weiterbildung gemäß Anspruch 6 gibt eine Möglichkeit an, den Durchbruch aus optischen oder technischen Gründen zu verschließen.

Durch die Weiterbildung gemäß Anspruch 7 ist gewährleistet, daß das Innere eines Desktop-PC, dessen nach unten weisende Seitenwand Luftansaugöffnungen enthält, nicht durch beispielsweise vom Fußboden angesaugte Partikel verunreinigt wird.

Die Weiterbildung nach Anspruch 8 schafft die Möglichkeit, den Rahmen seitlich aus der Bodenplatte herauszuziehen. Dies ist besonders vorteilhaft, wenn z.B. das Luftfilter regelmäßig gereinigt werden muß.

Die in den Ansprüchen 9, 10 und 11 angegebenen Merkmale gewährleisten eine besonders gute Handhabbarkeit des Rahmens beim Herausziehen aus der Bodenplatte, dessen sichere Führung und dessen sichere Fixierung in der Bodenplatte.

Die Ausgestaltung nach Anspruch 12 leistet einen Beitrag zur universellen Verwendbarkeit der Aufstellvorrichtung. Damit kann beispielsweise die Aufstellvorrichtung zum Aufhängen optional in eine Aufstellrichtung zum kippsicheren Aufstellen verwandelt werden und umgekehrt.

Die Weiterbildung gemäß Anspruch 13 gewährleistet beispielsweise einen ausreichenden Abstand zu einer rückwärtigen Tisch- oder Wandbegrenzung, damit an der Rückseite des Desktop-PC vorhandene Kabel nicht beschädigt werden können.

Ein Ausführungsbeispiel der Erfindung wird anhand der FIG 1 bis 6 näher erläutert. Es zeigen:

FIG 1 eine perspektivische Gesamtansicht der Aufstellvorrichtung,

FIG 2 einen Schnitt durch die Bodenplatte und die Rückwand,

FIG 3 einen Steg, der das Anstellen an einer Wand gewährleistet,

FIG 4 einen Steg, der eine freie vertikale Aufstellung ermöglicht,

FIG 5 ein Rastelement für den Rahmen und

FIG 6 ein Befestigungsmittel für die Rückwand.

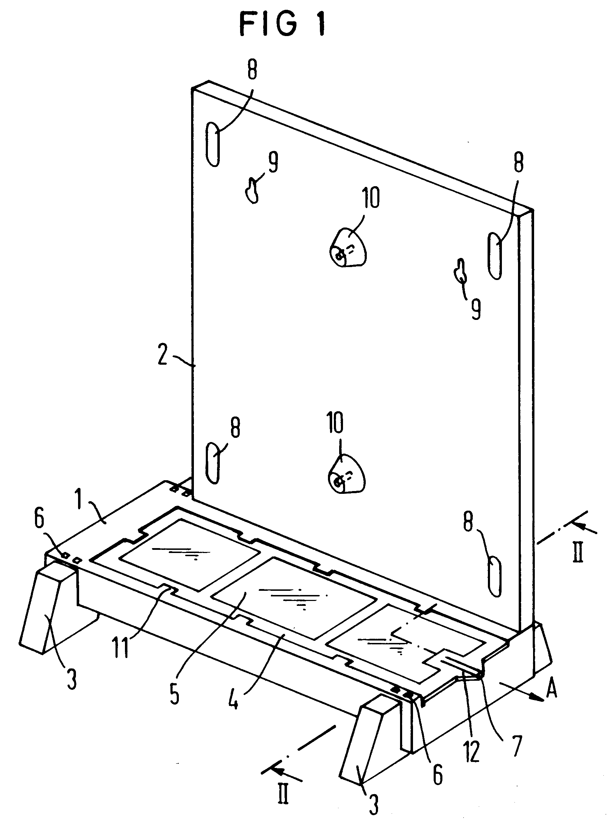

In FIG 1 ist eine Vorrichtung zur sicheren vertikalen Aufstellung eines Desktop-Personalcomputers (PC) perspektivisch dargestellt. Sie setzt sich aus einer Rückwand 2, einer Bodenplatte 1, Stegen 3 und einem Rahmen 4 zusammen. Die genannten Bauteile bestehen aus Kunststoff und sind im Spritzgußverfahren hergestellt. Ein auf den Rahmen 4 gespanntes Filter 5 besteht aus einem Stützgitter, das ein Vlies trägt. Stützgitter und Vlies bestehen aus thermischen Gründen aus Glasfaser. Die Rückwand 2 ist eine rechteckige, der Größe der Unterseite des Desktop-PC angepaßte ebene Platte. Sie ist rechtwinkelig und lösbar mit der Bodenplatte 1 verbunden, deren Form und Außenmaße der rechteckigen Form einer Seitenwand des Desktop-PC angepaßt sind. Die Bodenplatte 1 ist aber über die Rückseite des Desktop-PC hinaus verlängert und wird somit als Abstandhalter, der die Einhaltung eines Mindestabstandes der Rückseite des Desktop-PC von einer Tisch- oder Wandbegrenzung am Aufstellort gewährleistet. Eine unzulässige mechanische Belastung von auf der Rückseite befindlichen Kabeln wird damit vermieden.

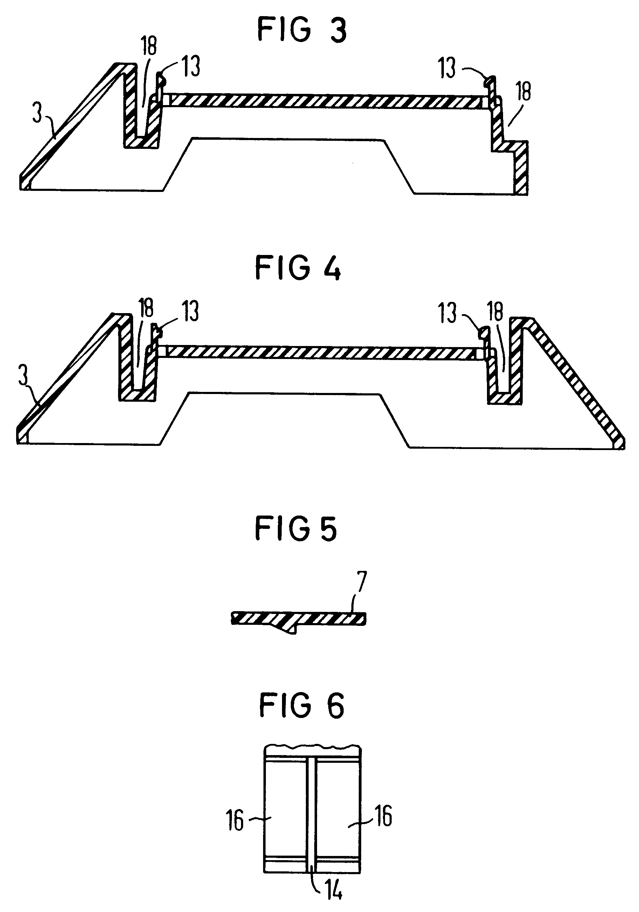

Die Bodenplatte 1 stützt sich mit ihren Endbereichen auf quer zur Rückwand 2 verlaufenden Stegen 3 ab. Um eine stabile Verbindung zwischen Bodenplatte 1 und Steg 3 herzustellen, greifen diese beiden Teile formschlüssig ineinander. Die Stege 3 weisen eine der Breite und Form der Bodenplatte 1 angepaßte nutartige Aussparung auf, die in den FIG 3 und 4 erkennbar ist. Der Querschnitt der Bodenplatte 1 hat die Form eines kopfstehenden U's. Die beiden U-Schenkel dringen in zu beiden Seiten der nutartigen Aussparung verlaufende Schlitze 18 ein, während die Bodenplatte 1 flächig auf dem Nutboden der Stege 3 aufliegt. Zur Erhöhung der Seitenstabilität und um beim Abheben der kompletten Aufstellvorrichtung ein Herausfallen der Stege 3 aus der Bodenplatte 1 zu verhindern, ist jeder Steg 3 durch in Öffnungen 6 in der Bodenplatte 1 eingreifende Schnapphaken 13 der Stege 3 lösbar mit der Bodenplatte 1 verbunden. Die Schnapphaken 13 und die Öffnungen 6 befinden sich jeweils paarweise an den Randbereichen der Bodenplatte 1 und den Randbereichen der nutartigen Aussparung der Stege 3.

Der trapezförmige Querschnitt der Stege 3 sorgt neben einem ansprechenden Design auch für die Kippsicherheit der Aufstellvorrichtung. Wird die Aufstellvorrichtung mit ihrer Rückwand 2 bündig an eine Wand gestellt, dann ist es nicht erforderlich, die Aufstellvorrichtung nach beiden Seiten hin kippsicher durch die Stege 3 abzustützen. Während eine Schmalseite der Stege 3 bündig mit der Bodenplatte 1 abschließen kann, verläuft die andere Schmalseite von der Oberseite zur Unterseite des Steges 3 hin schräg nach außen. Wird die Aufstellvorrichtung frei in einem Raum aufgestellt, dann muß die Aufstellvorrichtung nach beiden Seiten hin kippsicher sein. Eine solche Kippsicherheit ist durch den in FIG 4 dargestellten Steg, bei dem beide Schmalseiten schräg von der Oberseite zur Unterseite des Steges 3 hin verlaufen, gewährleistet.

Zumindest auf die Stege 3 kann bei Aufhängen der Aufstellvorrichtung an einer Wand gänzlich verzichtet werden. Zum Aufhängen der Aufstellvorrichtung weist die Rückwand 2 im oberen Bereich zwei tropfenförmige Durchdringungen 9 auf. Durch den unteren Teil der Durchdringung 9 paßt beispielsweise der Kopf einer in eine Wand gedrehten Schraube, der beim Absenken der Rückwand 2 diese formschlüssig umgreift.

Die Rückwand weist auch Mittel zur Befestigung und/oder Zentrierung der Unterseite des Desktop-PC auf. In den Eckbereichen der Rückwand 2 erkennt man langlochartige Vertiefungen 8, in die auf der Unterseite des Desktop-PC befindliche Gummifüße gestellt werden. Eine weitere Zentrierung erfolgt durch kegelstumpfförmige oder kugelsegmentartige Erhebungen 10. Der Ort, an dem diese Erhebungen 10 von der Oberfläche der Rückwand abstehen, ist so gewählt, daß die Erhebungen 10 in entsprechende Vertiefungen in der Unterseite des Desktop-PC eingreifen. Mittig in den Kegelstümpfen oder Kugelsegmenten befinden sich Bohrungen. Durch diese Bohrungen können Nieten oder Schrauben gesteckt werden, mit Hilfe derer der Desktop-PC an der Rückwand 2 befestigt wird.

Nach der Befestigung befindet sich der Desktop-PC so auf der Rückwand 2, daß die Bodenplatte 1 die linke Seitenwand des Desktop-PC vollständig verdeckt. Damit wäre ein Zugriff in den Desktop-PC nach Entfernen seiner Haube nur noch von vier Seiten her möglich. Die Bodenplatte 1 weist jedoch einen Durchbruch auf, der so groß ist, daß ein Zugang von der Seite her in den Desktop-PC trotz Bodenplatte 1 möglich ist. Der Durchbruch ist beispielsweise so groß, daß ein seitliches Herausziehen von elektronische Bauteile tragenden Steckkarten aus dem Desktop-PC ohne Entfernen der Bodenplatte 1 möglich ist.

Der Durchbruch in der Bodenplatte 1 ist durch den Rahmen 4 verschließbar. Der Rahmen 4 ist von der Frontseite des Desktop-PC her, also entgegen einer in FIG 1 eingetragenen Richtung A, über eine Führungsnut in der Bodenplatte 1, deren Breite und Dicke den Ausmaßen des Rahmens 4 entspricht, parallel zur Bodenplattenebene in den Durchbruch eingeschoben. Im Durchbruch stützt sich der Rahmen nach unten auf einer Auflagestütze 17 ab. Diese Auflagestütze 17 verläuft rund um den Durchbruch. Je nach Bedarf könnte die Auflagestütze 17 auch aus einer Vielzahl von einzelnen, partiell im Durchbruch angeordneten Auflagestützen 17 bestehen. Nach oben hin wird der Rahmen durch ihn übergreifende Zungen 11 so im Durchbruch gehalten, daß das auf den Rahmen 4 gespannte Filter 5 nicht über die Oberseite der Bodenplatte 1 herausragt.

Beim Erreichen der Endposition beim Einschieben des Rahmens 4 in den Durchbruch rastet ein in FIG 5 dargestelltes Rastelement 7 des Rahmens 4 in eine Vertiefung in der Bodenplatte 1 ein. Das Rastelement 7 ist Bestandteil des Rahmens und eines Ansatzes 12, der als Griff dient. Der Ansatz 12 steht auf der Frontseite der Aufstellvorrichtung über den Endbereich der Bodenplatte 1 hervor. Durch einfaches, geringfügiges Anheben des Rastelements 7 kann der Rahmen 4 entriegelt und wieder aus der Bodenplatte 1 gezogen werden.

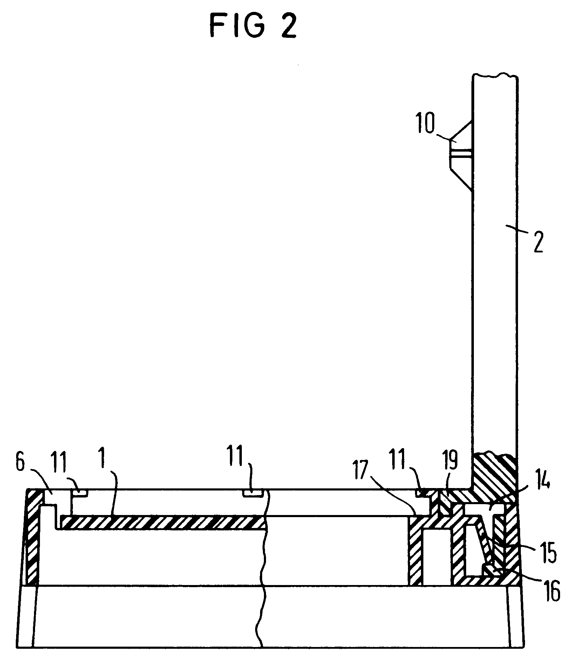

In FIG 2 ist ein Schnitt durch die Bodenplatte 1 und die Rückwand 2 dargestellt. Der Schnittverlauf ist in FIG 1 gekennzeichnet. Im linken Teil der Figur führt der Schnitt durch die Öffnung 6, in die der Schnapphaken 13 des Steges 3 einrasten soll. Der rechte Teil der FIG 2 zeigt insbesondere einen Schnitt durch ein Befestigungsmittel, das die Rückwand 2 und die Bodenplatte 1 lösbar miteinander verbindet. Eine Ansicht von links auf dieses Befestigungsmittel zeigt die FIG 6. Die Unterkante der Rückwand 2 ist durch einen Steg 19, der senkrecht von der Rückwandebene absteht, verbreitert. Dieser verbreiterte Teil der Rückwand 2 dringt in eine Vertiefung der Bodenplatte 1 ein und liegt dort flächig auf. An drei Stellen der Kontaktfläche zwischen Rückwand 2 und Bodenplatte 1 weist die Bodenplatte eine rechteckförmige Durchdringung auf. In diesen Durchdringungen befinden sich je zwei mit einem Ende an einer Durchdringungswand befestigte, von oben schräg nach unten verlaufende federnde Laschen 15. Beim Aufstecken der Rückwand 2 auf die Bodenplatte 1 dringt eine Wand 14 in den Zwischenraum zwischen den Laschen 15 ein. Auf beiden Seiten der Wand 14 sind L-förmige Winkel 16 angeordnet. Beim Eindringen der Wände 14 zwischen die federnden Laschen 15, gleiten diese federnden Laschen 15 auf den Winkeln 16 und werden dabei in Richtung derjenigen Durchdringungswand gedrückt, mit der sie an einem Ende verbunden sind. Bei Erreichen der Endposition der Rückwand 2 in der Bodenplatte 1 bewirkt die Federkraft der Laschen 15, daß ihr freies Ende in den Knick des Winkels 16 gedrückt wird. Ein Herausziehen der Rückwand 2 aus der Bodenplatte 1 ist erst nach Drücken der Laschen 15 in Richtung der mit ihnen verbundenen Durchdringungswand möglich.

**Patentansprüche**

1. Vorrichtung zur sicheren vertikalen Aufstellung eines Desktop-Personalcomputers (PC), **gekennzeichnet durch** mindestens eine Rückwand (2), die Mittel (8,10) zur Befestigung und/oder Zentrierung der Unterseite des Desktop-PC an der Rückwand (2) enthält, und durch an der Rückwand (2) vorgesehene Mittel (1,3,9) zum Aufhängen und/oder kippsicheren Aufstellen des Desktop-PC vorgesehen sind.

2. Vorrichtung nach Anspruch 1, **dadurch gekennzeichnet,** daß als Mittel zum kippsicheren Aufstellen des Desktop-PC eine mit der Rückwand (2) rechtwinkelig verbundene Bodenplatte (1) vorgesehen ist, deren Außenmaße mindestens so groß sind wie die Außenmaße einer Seitenwand des Desktop-PC, und daß an beiden Endbereichen der Bodenplatte (1) je ein quer zur Rückwand (2) verlaufender Steg (3) vorgesehen ist, der an der Oberseite eine der Breite und Form der Bodenplatte (1) angepaßte nutartige Aussparung aufweist.

3. Vorrichtung nach Anspruch 2, **dadurch gekennzeichnet,** daß mindestens eine Schmalseite der Stege (3) von der Oberseite zur Unterseite hin schräg nach aussen verläuft, so daß der Querschnitt der Stege (3) trapezförmig ist.

4. Vorrichtung nach einem der Ansprüche 2 oder 3,
   **dadurch gekennzeichnet,** daß die Stege (3) lösbar mit der Bodenplatte (1) verbunden sind.

5. Vorrichtung nach einem der Ansprüche 2 bis 4,
   **dadurch gekennzeichnet,** daß die Bodenplatte (1) wenigstens einen Durchbruch aufweist, der so groß ist, daß ein Zugang von der Seite her in den Desktop-PC möglich ist.

6. Vorrichtung nach Anspruch 5, **dadurch gekennzeichnet,** daß in den Durchbruch ein Rahmen (4) einlegbar ist, daß im Durchbruch mindestens eine Auflagestütze (17) vorgesehen ist, auf der der Rahmen (4) aufliegt und die Rahmenoberfläche nicht aus der Bodenplatte (1) herausragt.

7. Vorrichtung nach Anspruch 6, **dadurch gekennzeichnet,** daß die Rahmenoberfläche durch ein auf den Rahmen gespanntes Luftfilter (5) gebildet ist.

8. Vorrichtung nach einem der Ansprüche 6 oder 7, **dadurch gekennzeichnet,** daß in der Bodenplatte (1) eine wenigstens der Breite und Dicke des Rahmens (4) entsprechende, von außen zum Durchbruch hin reichende Führungsnut vorgesehen ist.

9. Vorrichtung nach einem der Ansprüche 6 bis 8, **dadurch gekennzeichnet,** daß auf der Oberseite der Bodenplatte (1) den Rahmen übergreifende Zungen (11), Lappen (11) oder dergleichen angeordnet sind.

10. Vorrichtung nach einem der Ansprüche 6 bis 9, **dadurch gekennzeichnet,** daß am Rahmen (4) mindestens ein Rastelement (7) vorgesehen ist, das in den Durchbruch oder eine sonstige Vertiefung in der Bodenplatte (1) eingreift.

11. Vorrichtung nach einem der Ansprüche 8 bis 10, **dadurch gekennzeichnet,** daß sich am Rahmen (4) ein als Griff dienender Ansatz (12) befindet.

12. Vorrichtung nach mindestens einem der vorhergehenden Ansprüche, **dadurch gekennzeichnet,** daß die Rückwand (2) und die Mittel zum kippsicheren Aufstellen (1) durch lösbare Befestigungsmittel miteinander verbunden sind.

13. Vorrichtung nach mindestens einem der vorhergehenden Ansprüche, **dadurch gekennzeichnet,** daß an der Schmalseite der Vorrichtung, die mit der Rückseite des Desktop-PC die Rückseite des aufgestellten oder aufgehängten Desktop-PC bildet, mindestens ein Abstandhalter vorgesehen ist.

# FIG 1

# FIG 2

FIG 3

FIG 4

FIG 5

FIG 6